# EUROPEAN PATENT APPLICATION

(11) **EP 4 851 475 A1**
(43) Date of publication of application: **09.12.2026**
(21) Application number: 26182701.8
(22) Date of filing: 02.06.2026
(51) Int. Cl.: F16D 48/06

(54) **VEHICLE**

(30) Priority: 04.06.2025 JP 2025093739
(71) Applicant: Yamaha Hatsudoki Kabushiki Kaisha, Iwata-shi, Shizuoka 438-8501 (JP)
(72) Inventor: MINAMI, Kengo, Iwata-shi, Shizuoka 438-8501 (JP); OKUZUMI, Shinobu, Iwata-shi, Shizuoka 438-8501 (JP)
(74) Representative: Stöckeler, Ferdinand

(57) **Abstract**

An object is to provide a vehicle capable of suppressing engine stalls accompanying a rapid deceleration of the rear wheel rotation due to a decrease in the required driving force or an increase in the frictional force of the rear wheel during obstacle traveling under a special environment such as a race. A control device of the vehicle, in a case of obstacle traveling in which the rotation speed of the front wheel is lower than an idle speed corresponding to idling of the engine, and in which the rear wheel is rotating at a speed higher than the front wheel by a driving force of the engine according to a required driving force commanded by the required driving force instruction unit, causes the clutch actuator to change the transmission state of the clutch from the engaged state toward the disengaged state when the rotation speed of the engine, due to a decrease in the driving force of the engine, falls below a second speed reference that is higher than a speed reference in a case other than the obstacle traveling.

## Description

### Technical Field

The present teaching relates to a vehicle.

### Background Art

For example, in Patent Document (PTL) 1, as an example of a vehicle, a motorcycle including a clutch provided between an engine and a transmission mechanism, and a clutch actuator that drives the clutch is described. This vehicle includes an engine stall suppression unit that controls the clutch actuator so as to disengage the clutch when conditions regarding a rotation speed are met. This suppresses the engine stalls.

### Citation List

### Patent Literature

PTL 1: Japanese Patent Application Laid-Open No. 2014-035065

### Summary of Invention

### Technical Problem

A vehicle may, for example, in a scene under a special environment such as a race, in which a front wheel of the vehicle gets over a log as an obstacle and then a rear wheel gets over the log, perform obstacle traveling, such that the accelerator is opened and the rear wheel gets over the log after rotating while slipping with respect to the ground.

In the vehicle, it may be desirable to suppress engine stalls accompanying rapid deceleration of rotation of the rear wheel due to a decrease in a required driving force or due to an increase in a frictional force of the rear wheel, during obstacle traveling under a special environment such as a race.

The purpose of the present teaching is to provide a vehicle that can suppress engine stalls accompanying rapid deceleration of rotation of the rear wheel due to a decrease in a required driving force or due to an increase in the frictional force of the rear wheel, during obstacle traveling under a special environment such as a race.

### Solution to Problem

In obstacle traveling, a rotation speed of the front wheel is lower than an idle speed corresponding to idling of the engine, and the rear wheel rotates at a high speed by a driving force of the engine. As a result of studying the above issue, the present inventors obtained a finding that, in a case of obstacle traveling, by changing a transmission state of a clutch from an engaged state when accompanying a decrease in a required driving force, a rotation speed of an engine falls below a reference that is higher than a speed reference in a case other than obstacle traveling, it is possible to suppress an engine stall accompanying rapid deceleration of rotation of a rear wheel due to the decrease in the required driving force.

More specifically, the control device of the vehicle defines obstacle traveling as a case in which a rotation speed of a front wheel is lower than an idle speed corresponding to idling of an engine, and in which a rear wheel rotates at a speed higher than the speed of the front wheel by a driving force of the engine corresponding to an operation amount of a required driving force instruction unit. Then, the control device, in the case of obstacle traveling, causes a clutch actuator to change the transmission state of the clutch from the engaged state toward a disengaged state when the rotation speed of the engine falls below a second speed reference that is higher than the speed reference in a case other than the obstacle traveling.

In the case of obstacle traveling, the rear wheel rotates at a speed higher than a rotation speed of the front wheel by the driving force of the engine. However, at the same time, the vehicle is kept from moving forward by an obstacle that the front wheel has gotten over. The engine outputs a driving force corresponding to the operation amount of the required driving force instruction unit. As a result, the vehicle operates such that the vehicle gradually moves forward while slipping the rear wheel.

In a case of normal traveling other than the obstacle traveling, a decrease in the rotation speed of the engine makes an engine brake effective. In the case of normal traveling other than the obstacle traveling, the control device causes the clutch actuator to change the transmission state of the clutch from the engaged state to the disengaged state when the rotation speed of the engine falls below the speed reference. Since the speed reference in a case other than the obstacle traveling is lower than the second speed reference in the case of obstacle traveling, a decrease in an effective period of an engine brake is suppressed.

In contrast, in the case of the obstacle traveling, the rotation of the rear wheel is subjected to resistance due to the obstacle. Therefore, when the required driving force of the required driving force instruction unit decreases, the rotation of the rear wheel rapidly decelerates. The change in a state of the clutch is performed by displacement of a position of the clutch itself and operation of the clutch actuator. As a result, during the change in the state of the clutch, an influence of rapid deceleration of the driving wheel due to locking may be transmitted to the engine, causing the engine to stall.

By the condition of a rotation speed at which a change in a transmission state of a clutch in a case of obstacle traveling starts being the higher second speed reference, the change in a state of the clutch starts earlier in a situation in which locking occurs. As a result, even if the switching of the transmission state of the clutch takes time, the influence of rapid deceleration of the driving wheel due to locking on the engine is suppressed. Therefore, it is possible to suppress engine stalls accompanying rapid deceleration of rotation of the rear wheel due to a decrease in the required driving force during obstacle traveling, while suppressing the reduction of the effective period of the engine brake.

Obstacle traveling is, for example, a traveling situation in which, in a special scene in which the front wheel of the vehicle gets over a log as an obstacle and then the rear wheel gets over the log, the accelerator is opened and the rear wheel, after rotating while slipping with respect to the ground, attempts to get over the log. The frictional force between the rear wheel and the log increases. Further, the obstacle traveling also encompasses, for example, a traveling situation in which the vehicle attempts to get out from an obstacle in a special situation such as mud or a depression in a snowy road surface and attempts to move forward. Further, the obstacle traveling also encompasses a power turn that is performed under a special environment such as a race. The power turn is, for example, a traveling situation in which, regarding operation of a front brake by a manual operation as a kind of obstacle, the vehicle is in a state in which traveling in a forward direction is hindered, the accelerator is opened, and the rear wheel slides in a left-right direction while rotating and slipping with respect to the ground. In the power turn, the vehicle makes a turn while attempting to move forward.

In order to achieve the above objectives, according to one aspect of the present teaching, a vehicle includes a following structure.
(1) A vehicle includes:
   an engine that outputs a driving force;
   a rear wheel that receives the driving force of the engine to rotate;
   a front wheel;
   a required driving force instruction unit that instructs a required driving force that is required as an output of the engine according to an operation amount by a driver of the vehicle;
   a clutch provided between the engine and the rear wheel, having a clutch actuator, the clutch changing a state between an engaged state and a disengaged state by driving of the clutch actuator; and
   a control device that controls the engine and the clutch actuator based on a rotation speed of the front wheel and a rotation speed of the rear wheel,
   wherein the control device,
   in a case of obstacle traveling in which the rotation speed of the front wheel is lower than an idle speed corresponding to idling of the engine, and in which the rear wheel is rotating at a speed higher than the front wheel by a driving force of the engine according to a required driving force commanded by the required driving force instruction unit, causes the clutch actuator to change a transmission state of the clutch from the engaged state toward the disengaged state when the rotation speed of the engine, due to a decrease in the driving force of the engine, falls below a second speed reference that is higher than a speed reference in a case other than the obstacle traveling.

The vehicle according to (1) includes the engine, the rear wheel, the front wheel, the required driving force instruction unit, the clutch, and the control device. The engine outputs a driving force. The rear wheel rotates by receiving the driving force of the engine. The required driving force instruction unit receives an operation within an operable range. The required driving force instruction unit commands a required driving force required for the engine according to an operation amount. The clutch is provided between the engine and the rear wheel and has the clutch actuator. The clutch changes a state between the engaged state and the disengaged state by driving of the clutch actuator. The engine and the clutch actuator are controlled by the control device.

In obstacle traveling, when the rotation speed of the engine falls below the second speed reference due to a decrease in the driving force of the engine, the control device causes the actuator to change the transmission state of the clutch from the engaged state toward the disengaged state. The second speed reference in the case of obstacle traveling is higher than the speed reference in a case other than obstacle traveling.

Obstacle traveling is a situation in which the rotation speed of the front wheel is lower than the idle speed, and the rear wheel rotates at a speed higher than that of the front wheel by the driving force of the engine corresponding to the operation amount of the required driving force instruction unit. In other words, the required driving force instruction unit instructs a required driving force for traveling while being subjected to an obstacle. The obstacle traveling is, for example, a traveling situation in which the front wheel of the vehicle gets over a log as an obstacle, the vehicle body is in a stopped state on the log, the accelerator is opened, and the rear wheel rotates while slipping with respect to the ground as the vehicle attempts to move forward. Further, the obstacle traveling is, for example, a traveling situation in which the vehicle attempts to get out from an obstacle such as mud or a depression in a snowy road surface and move forward. Further, the obstacle traveling also encompasses a power turn. The power turn is, for example, a traveling situation in which, regarding operation of a front brake by a manual operation as a kind of obstacle, the vehicle is in a state in which traveling in a forward direction is hindered, the accelerator is opened, and the rear wheel slides in a left-right direction while rotating and slipping with respect to the ground. In the power turn, the vehicle makes a turn while attempting to move forward.

In the case of obstacle traveling, the rear wheel rotates at a speed higher than a rotation speed of the front wheel by the driving force of the engine. However, at the same time, the vehicle is kept from moving forward by an obstacle. The engine outputs a driving force corresponding to the operation amount of the required driving force instruction unit. As a result, the vehicle operates so as to move forward at a low speed with its forward movement suppressed, rather than rotating the rear wheel while slipping in a stopped state.

In a case of normal traveling other than the obstacle traveling, a decrease in the rotation speed of the engine makes an engine brake effective. In the case of normal traveling other than the obstacle traveling, the control device causes the clutch actuator to change the transmission state of the clutch from the engaged state toward the disengaged state when the rotation speed of the engine falls below the speed reference. Since the speed reference in a case other than the obstacle traveling is lower than the second speed reference in the case of obstacle traveling, a decrease in an effective period of an engine brake is suppressed.

In contrast, in the case of the obstacle traveling, the rotation of the rear wheel is subjected to resistance due to the obstacle. Therefore, when the required driving force of the required driving force instruction unit decreases, the rotation of the rear wheel rapidly decelerates. The change in a state of the clutch is performed by displacement of a position of the clutch itself and operation of the clutch actuator. As a result, during the change in the state of the clutch, an influence of rapid deceleration of the driving wheel may be transmitted to the engine, causing the engine to stall.

According to (1), in the case of obstacle traveling, by the condition of a rotation speed at which a change in the transmission state of the clutch starts being the higher second speed reference, the change in the state of the clutch starts earlier in the situation of obstacle traveling. As a result, even if the switching of the transmission state of the clutch takes time, the influence of rapid deceleration of the driving wheel on the engine is suppressed. Therefore, it is possible to suppress engine stalls accompanying rapid deceleration of the rear wheel rotation due to a decrease in driving force, while suppressing the reduction of the effective period of the engine brake.

According to one aspect of the present teaching, a vehicle can employ the following configurations.

(2) The vehicle according to (1), such that,
in a case of obstacle traveling, when the driving force of the engine after the driving-force decrease is greater than a predetermined lower limit value, the control device causes the clutch actuator to change the transmission state of the clutch from the engaged state toward the disengaged state when the rotation speed of the engine falls below a third speed reference that is smaller than the second speed reference.

If the driving force of the engine after the decrease is greater than the predetermined lower limit value, the rear wheel can receive the driving force of the engine according to the required driving force even after the decrease in the driving force of the engine. Therefore, engine stalls hardly occur even when the rotation speed of the engine serving as a reference at which the transmission state of the clutch is changed from the engaged state decreases, and the timing of changing the transmission state of the clutch is delayed. In such cases, the engaged state of the clutch can be maintained for a longer period. The lower limit value is set to a value greater than a driving force of zero. Further, the third speed reference is set to a value that is smaller than the second speed reference and larger than the first speed reference.

(3) The vehicle according to (1) or (2), such that
the clutch actuator is an electric actuator that changes the state of the clutch without using an operating fluid.

The electric actuator drives to change the state of the clutch without a flow of the operating fluid. For this reason, the time from the start of control to the change in the state of the clutch is shorter than, for example, in the case of a hydraulic clutch using an operating fluid. Therefore, the time from when the rotation speed of the engine falls below the second speed reference, thereby causing start of driving by the clutch actuator, until the state of the clutch is changed is short. Therefore, occurrence of engine stalls due to rapid deceleration of the rotation of the rear wheel can be further suppressed.

The terminology used herein is for defining particular embodiments only and is not intended to be limiting the teaching. As used herein, the term "and/or" includes any and all combinations of one or more of the associated listed items. As used herein, the terms "including", "comprising", or "having", and variations thereof specify the presence of stated features, steps, operations, elements, components, and/or equivalents thereof, and can include one or more of steps, operations, elements, components, and/or their groups. As used herein, the terms "attached", "connected", "coupled", and/or equivalents thereof are used in a broad sense, and include both direct and indirect attachment, connection, and coupling. Further, "connected" and "coupled" are not limited to physical or mechanical connections or couplings, and may include direct or indirect electrical connections or couplings. Unless otherwise defined, all terms (including technical and scientific terms) used herein have the same meaning as commonly understood by one of ordinary skill in the art to which the present teaching belongs. It will be further understood that terms, such as those defined in commonly used dictionaries, should be interpreted as having a meaning that is consistent with their meaning in the context of the present disclosure and relevant art, and should not be interpreted in an idealized or overly formal sense unless expressly so defined herein. It will be understood that the description of the present teaching discloses many techniques and steps. Each of these has individual benefit and each can also be used in conjunction with one or more, or in some cases all, of the other disclosed techniques. Accordingly, for the sake of clarity, this description will refrain from repeating every possible combination of the individual steps in an unnecessary fashion. Nevertheless, Description and Claims should be read with the understanding that such combinations are entirely within the scope of the present invention as defined by the appended claims.

This Description describes a novel vehicle. In the description given below, for the purposes of explanation, numerous specific details are set forth in order to provide a thorough understanding of the present teaching. It will be apparent, however, that those skilled in the art may practice the present teaching without these specific details. The present disclosure is to be considered as an exemplification of the present teaching, and is not intended to limit the present teaching to the specific embodiments illustrated by drawings or descriptions below.

The vehicle is, for example, a straddled vehicle. A straddled vehicle is a form of vehicle in which the driver sits astride the saddle. A straddled vehicle is, for example, a lean vehicle. However, the vehicle is not particularly limited and may be, for example, a four-wheeled vehicle having a passenger compartment.

The lean vehicle is a straddled vehicle configured to turn in a lean posture. A straddled vehicle is a form of vehicle in which the driver sits astride the saddle. The lean vehicle is configured to turn in a posture tilted toward the center of a curve. As a result, the vehicle configured to turn in a lean posture counteracts the centrifugal force acting on the vehicle during the turn. An example of the lean vehicle is an off-road motorcycle. The lean vehicle is not particularly limited, and for example, may be an on-road type, a scooter type, a moped type, or even a motor tricycle. In a lean vehicle, since agility is required, responsiveness of movement to a starting operation is emphasized.

The operation of the engine is that the engine outputs a driving force generated by combustion as torque and a rotation speed of the crankshaft.

The state of the clutch changes between the engaged state and the disengaged state. The state of the clutch also includes an intermediate state between the engaged state and the disengaged state. Changing the state of the clutch from the engaged state includes setting the state to the disengaged state or the intermediate state. The output of the clutch actuator changes a state of the clutch without driving a shift operation of a dog-clutch transmission.

The control device is configured by a computer that includes, for example, a central processing unit (CPU) that executes a program and a memory that stores the program. However, the control device is not particularly limited and may be configured by an electronic circuit that does not execute a program.

The condition for the operation of the control device, that the rotation speed of the engine falls below the second speed reference, can be determined, for example, by directly detecting the rotation speed of the engine. However, a detection location of the rotation speed for determining the condition is not particularly limited; for example, a rotation speed of a part that rotates synchronously with the engine, such as the clutch, transmission, or driving wheel, may be adopted.

The required driving force instruction unit is, for example, an accelerator operation unit that commands the required driving force according to an operation amount by a driver. However, the required driving force instruction unit is not particularly limited and may be, for example, a throttle unit that instructs the required driving force as the opening degree of the throttle valve.

### Effects of Invention

According to the present teaching, it is possible to provide a vehicle capable of suppressing engine stalls accompanying rapid deceleration of rotation of the rear wheel due to a decrease in the required driving force during obstacle traveling.

### Brief Description of Drawings

[FIG. 1] A side view showing an outline configuration of a vehicle according to a first embodiment.
[FIG. 2] A flowchart illustrating a clutch control operation of a control device shown in FIG. 1.
[FIG. 3] A timing chart illustrating an example of the clutch control operation of the control device shown in FIG. 1.
[FIG. 4] A flowchart illustrating an operation of a control device according to a second embodiment.
[FIG. 5] A timing chart showing an example of clutch control operation in the second embodiment.

### Description of Embodiments

In the following, embodiments of the present teaching will be described with reference to the drawings.

### [First Embodiment]

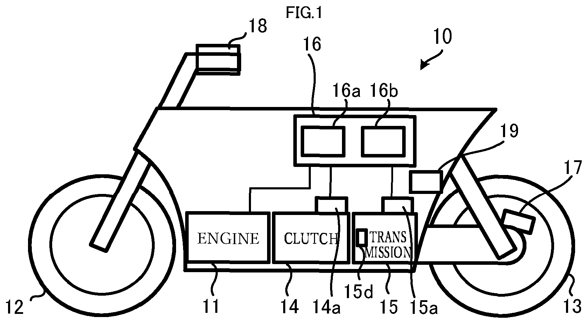

FIG. 1 is a side view showing an outline configuration of a vehicle according to the first embodiment.

A vehicle 10 shown in FIG. 1 includes an engine 11, a rear wheel 13, a clutch 14, a required driving force instruction unit 18, and a control device 16. The vehicle 10 also includes a front wheel 12, a dog-clutch transmission 15 (transmission), and a rear wheel brake 17.

The engine 11 outputs a driving force. The rear wheel 13 rotates by receiving the driving force of the engine 11.

The rear wheel brake 17 brakes the rear wheel 13.

The clutch 14 has a clutch actuator 14a. The clutch 14 changes a state of a driving force between an engaged state and a disengaged state by driving of the clutch actuator 14a. In the clutch 14, a clutch plate (not shown) displaces between a position corresponding to the engaged state and a position corresponding to the disengaged state. This causes a state of the clutch 14, that is a transmission state, to become the engaged state or the disengaged state. The clutch 14 has a half-clutch state and a half-engaged state between the engaged state and the disengaged state. The half-engaged state is a state between the half-clutch state and the disengaged state. That is to say, the half-clutch state is a state between the half-engaged state and the engaged state. In other words, the state of the clutch 14 changes in an order of the engaged state, the half-clutch state, the half-engaged state, and the disengaged state. A clutch capacity in the half-clutch state is a capacity that can transmit a driving force from the engine 11, which increases during departure of the vehicle 10, to the rear wheel 13. The clutch capacity in the half-clutch state can also transmit a force of the engine brake to the rear wheel 13. The clutch capacity in the half-engaged state is a capacity that can transmit a force of the engine brake to the rear wheel 13, but cannot transmit a driving force of the engine 11 that increases during departure.

The clutch actuator 14a is, for example, an electric actuator that changes a state of the clutch without using an operating fluid. The electric actuator drives to change the state of the clutch 14 without a flow of the operating fluid. For this reason, the time from the start of control to the change in the state of the clutch 14 is shorter than, for example, in the case of a hydraulic clutch using an operating fluid.

The dog-clutch transmission 15 performs switching of gear stages. The dog-clutch transmission 15 shifts up by disengaging and engaging the dog 15d. Further, the dog-clutch transmission 15 shifts down by disengaging and engaging the dog 15d. The dog-clutch transmission 15 transmits a driving force of the engine 11, as a transmitted driving force, to the rear wheel 13 through the engaged dog 15d. As the dog-clutch transmission 15, a configuration including a shift actuator 15a may also be adopted. In this case, the output of the shift actuator 15a drives the operation of the dog-clutch transmission 15 without driving the operation of the clutch 14.

The required driving force instruction unit 18 is, for example, an accelerator operation element. The required driving force instruction unit 18 commands a required driving force that is required as an output of the engine 11 according to an operation amount by a driver.

The control device 16 controls the engine 11 and the clutch actuator 14a.

The control device 16 is configured by a computer that includes a central processing unit (CPU) 16a that executes a program and a memory 16b that stores the program. The central processing unit 16a controls the engine 11 and the clutch actuator 14a by reading and executing a program stored in the memory 16b.

The control device 16 controls the engine 11 and the clutch actuator 14a. For example, the control device 16 controls the clutch actuator 14a based on the rotation speed of the engine 11, the required driving force of the required driving force instruction unit 18, the rotation speed of the front wheel 12, and the rotation speed of the rear wheel 13.

In this specification, the speed of the front wheel 12 and the speed of the rear wheel 13, when compared to the rotation speed of the engine 11, each refer to the rotation speed that corresponds to and is converted from the rotation speed of the engine 11 based on the gear ratio and the like. The rotation speed of the engine 11 specifically refers to the rotation speed at a crankshaft of the engine 11.

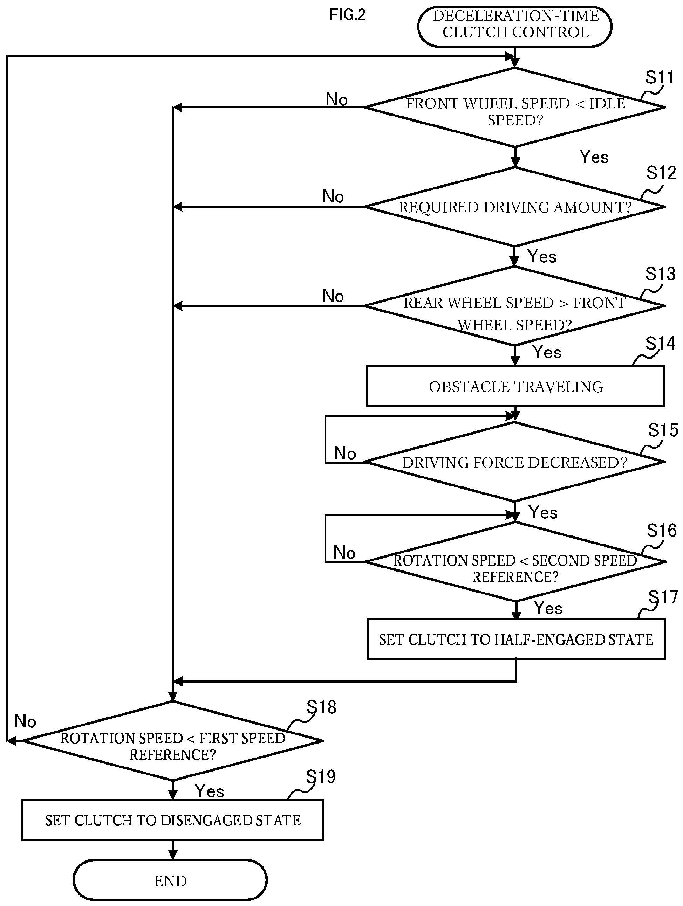

FIG. 2 is a flowchart illustrating a clutch control operation of the control device shown in FIG. 1.

FIG. 2 shows the clutch control operation when the traveling speed of the vehicle 10 decreases.

The control device 16 switches the operation content of the clutch 14 in the case where the rotation speed of the engine 11 decreases, depending on whether the vehicle 10 is in an obstacle traveling state or not.

Obstacle traveling is, for example, a traveling situation in which the front wheel 12 of the vehicle 10 gets over a log as an obstacle and then the rear wheel 13 gets over the log, the accelerator as the required driving force instruction unit 18 is opened and the rear wheel 13, after the rear wheel 13 rotates while slipping with respect to the ground, attempts to get over the log.

In such a scene, the vehicle 10 travels at a low speed. The front wheel 12 is less likely to slip because it does not receive the driving force from the engine 11. Therefore, the rotation speed of the front wheel 12 reflects the traveling speed of the vehicle 10.

In the obstacle traveling, the accelerator is opened, and the rear wheel 13, after the rear wheel 13 rotates while slipping with respect to the ground, attempts to get over the log so that the vehicle 10 moves forward at a low speed.

When the speed of the front wheel 12 falls below the idle speed (S11: Yes), a required driving force that is not zero is instructed from the required driving force instruction unit 18 (S12: Yes), and further, when the speed of the rear wheel 13 exceeds the speed of the front wheel 12 (S13: Yes), the control device 16 determines that the state is the obstacle traveling state (S14).

If the vehicle 10 is not in an obstacle traveling state (S11: No, or S12: No, or S13: No), the control device 16 performs control in the normal state. The control device 16, in the normal state, causes the clutch actuator 14a to change the state of the clutch 14 from the engaged state to the disengaged state (S19), when the rotation speed of the engine 11 falls below a first speed reference (S18: Yes). The first speed reference is set to the idle speed of the engine 11, for example.

As a result, even when the vehicle 10 is in the normal state that is not in the obstacle traveling state, the stalls of engine 11 are suppressed during the deceleration of the vehicle 10.

In the case of the obstacle traveling state (S11: Yes, and S12: Yes, and S13: Yes), the control device 16 determines whether the driving force of the engine 11 has decreased and whether the rotation speed of the engine 11 falls below the second speed reference (S15, S16). The decrease in the driving force can be detected, for example, as a decrease in the required driving force. The second speed reference referred to in the obstacle traveling state is set to a value higher than the first speed reference referred to in the normal state. When the driving force of the engine 11 has decreased (S15: Yes) and the rotation speed of the engine 11 falls below the second speed reference (S16: Yes), the control device 16 causes the clutch actuator 14a to change the state of the clutch 14 from the engaged state to the half-engaged state (S17). In other words, the control device 16 causes the clutch actuator 14a to change the state of the clutch 14 from the engaged state toward the disengaged state.

The rear wheel 13 in the obstacle traveling state, for example, rotates by the driving force from the engine 11 so as to slip with respect to the ground or the obstacle, while receiving resistance from the obstacle. At this time, the rear wheel 13 is rotating at a higher speed than the front wheel 12. For example, when the driving force decreases, the rotating rear wheel 13 may rapidly decelerate due to the resistance. The rear wheel 13 rapidly decelerates, for example, as if the rear wheel 13 rotating while the vehicle 10 is traveling is locked.

According to this embodiment, in the state of the obstacle traveling, the change of the state of the clutch 14 starts early. As a result, even if the switching of the transmission state of the clutch 14 takes time, the influence of rapid deceleration of the rear wheel 13 on the engine 11 is suppressed.

In the state of the obstacle traveling, after changing the state of the clutch 14 to the half-engaged state (S17), when the rotation speed of the engine 11 falls below a first speed reference (S18: Yes), the control device 16 causes the clutch actuator 14a to change the state of the clutch 14 to the disengaged state (S19).

The control device 16 ends a deceleration-time clutch control shown in FIG. 2 by, for example, turning the clutch 14 to the disengaged state in step S19. Further, when the required driving force required as the output of the engine 11 increases and the rotation speed of the engine 11 increases during the deceleration-time clutch control, the control device 16 ends the deceleration-time clutch control and changes the state of the clutch 14 to the engaged state.

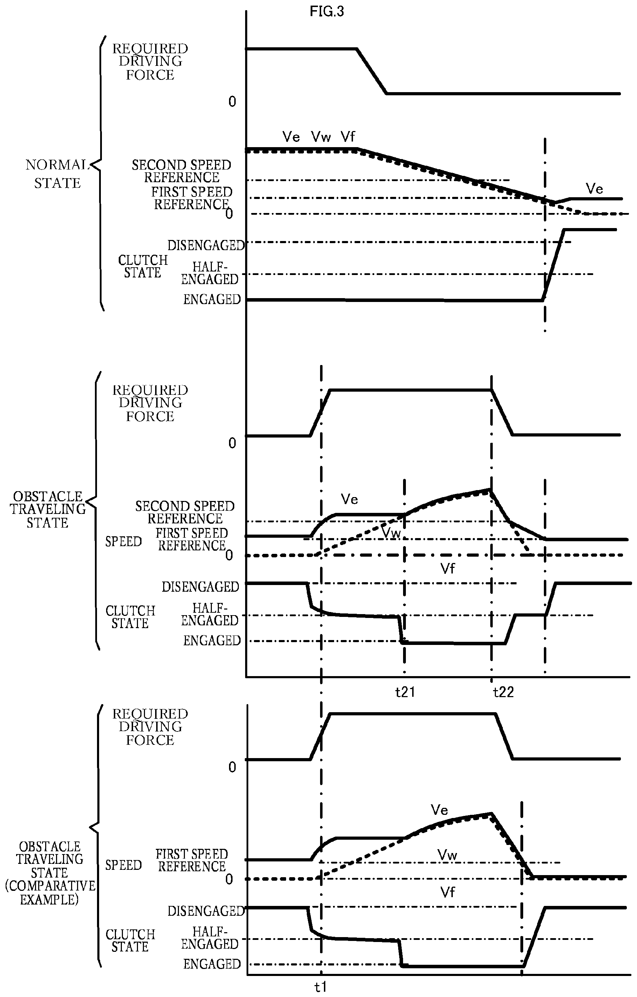

FIG. 3 is a timing chart illustrating an example of the clutch control operation of the control device shown in FIG. 1.

The timing chart in FIG. 3 shows the operational states of each part when the rotation speed of the rear wheel 13 of the vehicle 10 in this embodiment decreases toward zero, for both the normal state that is not the obstacle traveling and the state of the obstacle traveling. More specifically, the required driving force, the speed of the front wheel 12, the speed of the rear wheel 13, the engine speed, and the state of the clutch 14 are shown. The speed of the front wheel 12 and the speed of the rear wheel 13 are converted to the rotation speed of the engine 11 to clarify the relationship with the rotation speed of the engine 11, and are indicated by a dashed line.

Further, the timing chart in FIG. 3 shows the operation of each part in the case where a clutch control corresponding to the obstacle traveling is not performed during the state of the obstacle traveling, as a comparative example of the present embodiment.

In the normal state, for example, when the required driving force instructed by the required driving force instruction unit 18 decreases and the driving force output from the engine 11 decreases, the rotation speed Ve of the engine 11 decreases. In the normal state, for example, unlike the obstacle traveling in which an obstacle is gotten over, the rear wheel 13 does not lock or slip. For this reason, the speed Vf of the front wheel 12 and the speed Vw of the rear wheel 13 are substantially equal to the rotation speed Ve of the engine 11.

The speed Vf of the front wheel 12 and the speed Vw of the rear wheel 13 reflect the traveling speed of the vehicle 10. The traveling vehicle 10 has inertia. The influence of the inertia on the vehicle 10 at the traveling speed of the vehicle 10 is significant. The speed Vw of the rear wheel 13 decreases relatively gradually as the traveling speed of the vehicle 10 decreases. As the speed Vf of the front wheel 12 and the speed Vw of the rear wheel 13 decrease, the rotation speed Ve of the engine 11 also decreases relatively gradually.

When the rotation speed of the engine 11 falls below the first speed reference, the control device 16 causes the clutch actuator 14a to change the state of the clutch 14 from the engaged state to the disengaged state. The first speed reference is set to the idling rotation speed of the engine 11.

The change in the state of the clutch 14 is performed by the operation of the clutch actuator 14a and by displacement of the position of the clutch plate included in the clutch 14. Therefore, changing the state of the clutch 14 takes time. For this reason, the rotation speed Ve of the engine 11 continues to decrease along with the speed Vw of the rear wheel 13 until the clutch 14 enters the disengaged state, even after the rotation speed of the engine 11 falls below the first speed reference. However, in the normal state, the decrease in the speed Vw of the rear wheel 13 is gradual, so the decrease in the rotation speed Ve of the engine 11 after the rotation speed Ve of the engine 11 falls below the first speed reference is small.

After the clutch 14 enters the disengaged state, the speed Vw of the rear wheel 13 continues to decrease and, for example, eventually reaches zero. At this time, the traveling of the vehicle 10 stops. After the clutch 14 enters the disengaged state, the rotation speed Ve of the engine 11 recovers to the idling rotation speed. As a result, occurrence of stall of the engine 11 is suppressed.

In the normal state, the decrease in the rotation speed Ve of the engine 11 after the rotation speed Ve of the engine 11 falls below the first speed reference is small.

As the state of obstacle traveling, FIG. 3 shows an operation in which, after the front wheel 12 gets over an obstacle, the rear wheel 13 attempts to get over the log.

For example, at timing t1, as the required driving force instructed by the required driving force instruction unit 18 increases, the rotation speed Ve of the engine 11 begins to increase, and the clutch 14 transitions from the disengaged state to the half-engaged state. The vehicle 10 is kept from moving forward by the obstacle, and the speed Vf of the front wheel 12 is maintained at zero or at a low speed, while the rear wheel 13 begins to slip by receiving driving force from the engine 11. The speed Vw of the rear wheel 13 increases. At timing t21, after the clutch 14 is in the engaged state, the speed Vw of the rear wheel 13 becomes equal to the speed of the engine 11. After the clutch 14 enters the engaged state, the rear wheel 13 continues to slip, and the speed Vw of the rear wheel 13 further increases. The speed Vw of the rear wheel 13 is greater than the speed Vf of the front wheel 12.

At timing t22, for example, the driving force of engine 11 decreases due to a reduction in the required driving force. Since the rear wheel 13 is subjected to rotational resistance due to friction with an obstacle or a road surface, the speed Vw of the rear wheel 13 rapidly decreases according to a reduction in the driving force. The rotation speed Ve of the engine 11 rapidly decreases along with the speed Vw of the rear wheel 13.

In this embodiment, in the case of obstacle traveling (S14 in FIG. 2), when the rotation speed Ve of the engine 11 falls below the second speed reference, the control device 16 causes the clutch actuator 14a to change the state of the clutch 14 from the engaged state to the half-engaged state. The second speed reference is set to a value higher than the first speed reference in the normal state. As mentioned above, changing the state of the clutch 14 takes time. During this change, the rotation speed Ve of the engine 11 continues to decrease along with the speed Vw of the rear wheel 13.

In this embodiment, the second speed reference is higher than the first speed reference in the normal state. Therefore, the state of the clutch 14 changes when the rotation speed Ve of the engine 11 is, for example, high as compared to the normal state. In other words, the engaged state of clutch 14 is released in a shorter time compared to a case where the first speed reference for the normal state is used. Therefore, the rotation speed Ve of the engine 11 escapes, in a short time, from the influence of a decrease in the speed Vw of the rear wheel 13, and a decrease amount of the rotation speed Ve is suppressed. As a result, after the clutch 14 enters the half-engaged state, the rotation speed Ve of the engine 11 becomes the idling rotation speed. As a result, occurrence of stall of the engine 11 is suppressed.

As shown in the comparative example, when the first speed reference which is the same as in the normal state is used, that is, when control based on the second speed reference is not performed, if the rotation speed of the engine 11 falls below the first speed reference, the control device 16 causes the clutch actuator 14a to change the state of the clutch 14 from the engaged state to the disengaged state. However, changing the state of the clutch 14 takes time. During this time, the rotation speed Ve of the engine 11, which rapidly decelerates due to resistance of friction with an obstacle or a road surface, falls significantly below the idling speed. As a result, engine 11 is prone to stalling.

In contrast, in this embodiment, during obstacle traveling, when the rotation speed Ve of the engine 11 falls below the second speed reference, which is higher than the first speed reference in the normal state, the state of the clutch 14 changes from the engaged state. Therefore, even if the speed Vw of the rear wheel 13 rapidly decreases, occurrence of stall of the engine 11 is suppressed.

When the clutch actuator is an electric actuator, the time from when the rotation speed of the engine 11 falls below the second speed reference, thereby causing start of driving by the clutch actuator 14a, until the state of the clutch 14 is changed is short. Therefore, occurrence of stall of the engine 11 due to rapid deceleration of the rotation of the rear wheel 13 is further suppressed.

In this embodiment, in the normal state that is not obstacle traveling, as described above, when the rotation speed Ve of the engine 11 falls below the first speed reference, which is lower than the second speed reference, the state of the clutch 14 changes from the engaged state. For this reason, the engine brake can be effective for a long period until the rotation speed of the engine 11 decreases to near an idling speed.

According to this embodiment, it is possible to suppress stalls of the engine 11 accompanying rapid deceleration of rotation of the rear wheel 13 due to a decrease in driving force of the engine 11 accompanying a decrease in required driving force during obstacle traveling.

### [Second Embodiment]

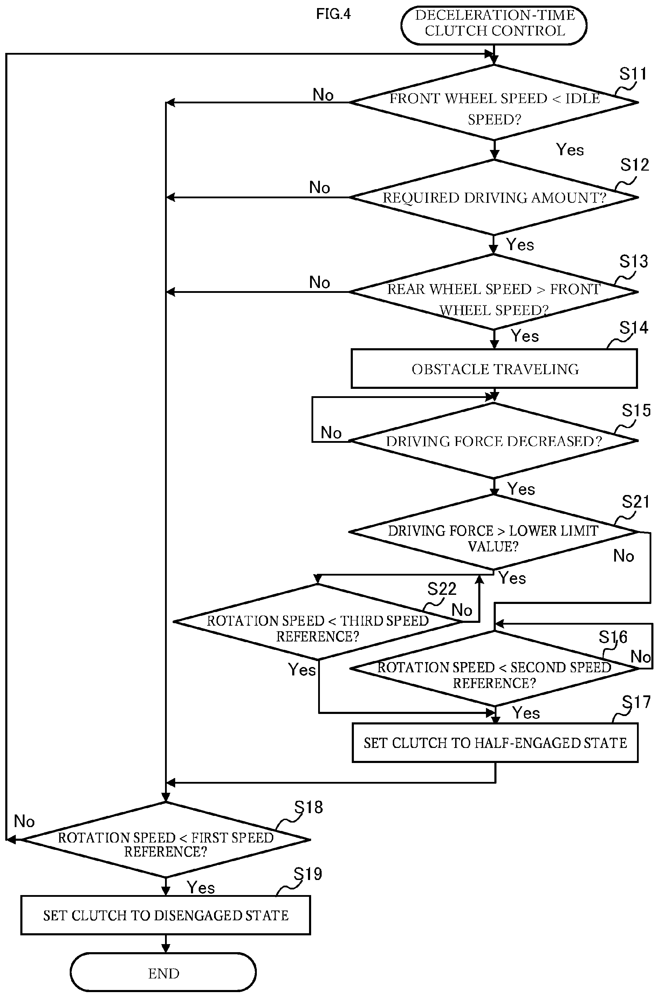

FIG. 4 is a flowchart illustrating operations of a control device according to the second embodiment.

The operation of the control device 16 in this embodiment includes step S21 and step S22 additionally to the operation of the first embodiment shown in FIG. 2. Other operations are common to the operation of the first embodiment. Therefore, the same reference characters are assigned to common elements and operations, and overlapping explanations are omitted.

The control device 16 determines whether or not the driving force of the engine 11 in obstacle traveling (S14), after the required driving force of the required driving force instruction unit 18 has decreased (Yes in S15), is larger than a predetermined lower limit value (S21). The lower limit value is, for example, set to a value greater than zero.

When the driving force is not larger than the lower limit value (No in S21), the control device 16, as in the case of the above-described first embodiment, changes the state of the clutch 14 from the engaged state to the half-engaged state (S17) when the rotation speed of the engine 11 falls below the second speed reference (Yes in S16).

When the driving force is larger than the lower limit value (Yes in S21), the control device 16 changes the state of the clutch 14 from the engaged state to the half-engaged state (S17) when the rotation speed of the engine 11 falls below the third speed reference (Yes in S22). The third speed reference is set to a value that is, for example, smaller than the second speed reference and larger than the first speed reference.

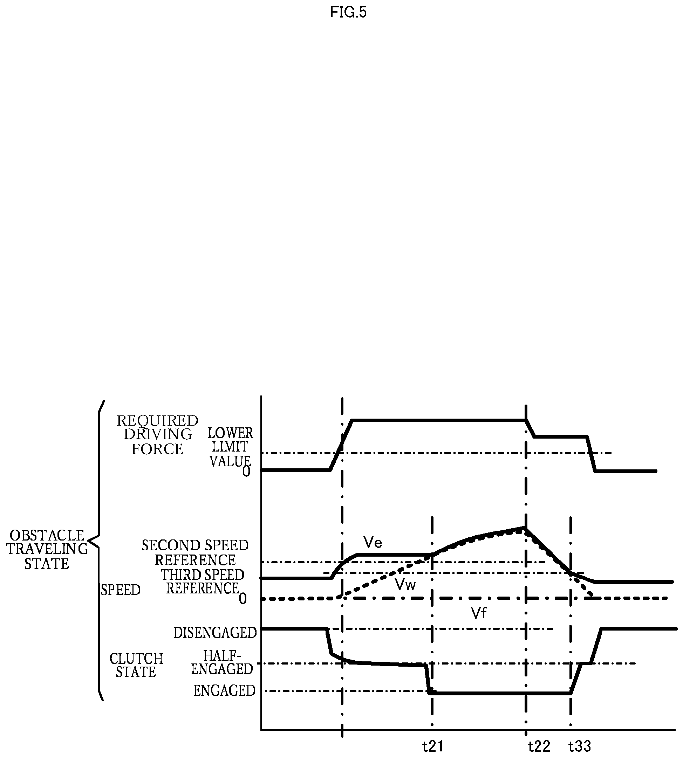

FIG. 5 is a timing chart showing an example of clutch control operation in the second embodiment.

The operation shown in FIG. 5 differs from the operation of the first embodiment shown in FIG. 3 in the operation after timing t22 in an obstacle traveling state.

If the driving force of the engine 11 after decreasing at timing t22 is greater than the lower limit value, the driving force is greater than zero. Therefore, the rear wheel 13 can receive driving force corresponding to the required driving force even after the decrease in the driving force of the engine 11. In this case, stalls of the engine 11 hardly occur even when the rotation speed serving as a reference at which the state of the clutch 14 is changed to the half-engaged state decreases, and the timing of changing the transmission state of the clutch 14 is delayed. In such a case, according to this embodiment, it is possible to suppress a decrease in the driving force due to an unnecessary clutch disengaging operation by maintaining the engaged state of the clutch 14 for a longer period.

### List of Reference Signs

- 10:: vehicle
- 11:: engine
- 12:: front wheel
- 13:: rear wheel
- 14:: clutch
- 14a:: clutch actuator
- 16:: control device
- 18:: required driving force instruction unit

## Claims

1. A vehicle (10), comprising:
an engine (11) that is configured to output a driving force;
a rear wheel (13) that is configured to receive the driving force of the engine (11) to rotate;
a front wheel (12);
a required driving force instruction unit (18) that is configured to instruct a required driving force that is required as an output of the engine (11) according to an operation amount by a driver of the vehicle (10);
a clutch (14) provided between the engine (11) and the rear wheel (13), having a clutch actuator (14a), the clutch (14) changing its state between an engaged state and a disengaged state by driving of the clutch actuator (14a); and
a control device (16) that is configured to control the engine (11) and the clutch actuator (14a) based on a rotation speed of the front wheel (12) and a rotation speed of the rear wheel (13),
wherein the control device (16) is configured to,
in a case of obstacle traveling in which the rotation speed of the front wheel (12) is lower than an idle speed corresponding to idling of the engine (11), and in which the rear wheel (13) is rotating at a speed higher than the front wheel (12) by a driving force of the engine (11) according to a required driving force commanded by the required driving force instruction unit (18), cause the clutch actuator (14a) to change a transmission state of the clutch (14) from the engaged state toward the disengaged state when the rotation speed of the engine (11), due to a decrease in the driving force of the engine (11), falls below a second speed reference that is higher than a speed reference in a case other than the obstacle traveling.

2. The vehicle (10) according to claim 1, wherein
in a case of obstacle traveling, when the driving force of the engine (11) after the driving-force decrease is greater than a predetermined lower limit value, the control device (16) is configured to cause the clutch actuator (14a) to change the transmission state of the clutch (14) from the engaged state toward the disengaged state when the rotation speed of the engine (11) falls below a third speed reference that is smaller than the second speed reference.

3. The vehicle (10) according to claim 1 or 2, wherein
the clutch actuator (14a) is an electric actuator that is configured to change the state of the clutch (14) without using an operating fluid.
